Europäisches Patentamt

**European Patent Office**

**Office européen des brevets**

(19)

(11) Numéro de publication: **0 089 910**

**A1**

(12)

# DEMANDE DE BREVET EUROPEEN

(21) Numéro de dépôt: **83450006.8**

(22) Date de dépôt: **11.03.83**

(51) Int. Cl.³: **B 62 D 61/10**
**B 62 D 21/18**

(30) Priorité: **12.03.82 FR 8204367**

(43) Date de publication de la demande:
**28.09.83 Bulletin 83/39**

(84) Etats contractants désignés:
**DE GB NL**

(71) Demandeur: **van den Berg, Christian**
**63, avenue du Général de Gaulle Cadaujac**
**F-33140 Pont de la Maye(FR)**

(72) Inventeur: **van den Berg, Christian**
**63, avenue du Général de Gaulle Cadaujac**
**F-33140 Pont de la Maye(FR)**

(74) Mandataire: **Thebault, Jean-Louis**
**3, rue du Professeur Demons**
**F-33000 Bordeaux(FR)**

(54) **Engin automobile tous terrains à ossature porteuse à géométrie variable.**

(57) L'invention concerne un engin automobile tous terrains à ossature porteuse à géométrie variable constituée d'une poutre-châssis (1), d'une traverse (5) aux extrémités de laquelle sont articulés deux cadres (17) porteurs de deux roues arrière (10). Conformément à l'invention, l'axe (B-B) de la traverse (5) peut pivoter autour de l'axe (A-A) de la pourtre-châssis (1); les cadres (17) sont réglables en éloignement par rapport audit (A-A), et sont montés de mainière à osciller, d'une part, autour dudit axe (B-B) et, d'autre part, autour d'un axe-pivot parallèle à l'axe (A-A). Enfin, l'axe (B-B) de la traverse (5) peut s'incliner sur l'axe (A-A) par une articulation appropriée de la traverse (5) sur la poutre-châssis (1).

Application au déplacement notamment d'outils en terrains non plats.

FIG.1

- 1 -

## ENGIN AUTOMOBILE TOUS TERRAINS À OSSATURE PORTEUSE À GÉOMÉTRIE VARIABLE

La présente invention concerne un engin automobile apte à se déplacer sur tous terrains et dont l'ossature ou structure porteuse est capable de se déformer géométriquement automatiquement ou sous la commande du conducteur afin d'adapter l'engin aux irrégularités du terrain en vue notamment de maintenir l'horizontalité du châssis de l'engin, la verticalité des roues du train arrière ainsi que de maintenir ou de modifier la voie de ces dernières.

Plus précisément, l'invention se rapporte à des perfectionnements au type d'engin décrit dans le brevet français N° 74-31747 déposé au nom du Demandeur.

Ce brevet a trait à un engin porteur automobile tous terrains comprenant une poutre-châssis centrale supportée à l'avant par un train moteur et directeur à une ou deux roues et à l'arrière par un train arrière en forme de boggie.

Ce boggie présente une structure originale consistant à prévoir, de chaque côté de la poutre-châssis, deux roues motrices disposées dans le même plan et portées par un cadre triangulaire en forme de fourche de bicyclette.

Le montage de l'ensemble est tel que le cadre triangulaire peut osciller à la fois autour d'un axe orthogonal à l'axe longitudinal de la poutre-châssis et autour d'un axe parallèle à cet axe longitudinal.

Enfin, ce montage prévoit également la possibilité de modifier la distance desdits cadres à la poutre-châssis c'est-à-dire de modifier la voie du train arrière.

Le but de la présente invention est de perfectionner une telle structure en la rendant plus fiable et plus souple

0089910

dans son utilisation, en particulier en lui donnant des degrés de liberté contrôlés et réglables supplémentaires susceptibles de permettre à l'engin de s'adapter aux divers terrains avec une efficacité, une docilité et une puissance remarquables.

A cet effet, l'invention a pour objet un engin automobile tous terrains à roues indépendantes et commandées par un moteur coaxial à chacune des roues motrices, comprenant une poutre-châssis dans l'axe longitudinal de symétrie de l'engin, une roue avant portée par une fourche ou analogue elle-même montée à l'avant de la poutre-châssis et orientable autour d'un axe perpendiculaire à ladite poutre-châssis, et un train arrière moteur composé, de chaque côté de la poutre-châssis, de deux roues disposées dans le même plan et portées par un cadre triangulaire en forme de fourche de bicyclette, ce cadre étant relié à la poutre-châssis par une liaison permettant, d'une part, une rotation dudit cadre à la fois autour d'un axe orthogonal à la poutre-châssis et autour d'un axe parallèle à cette dernière et, d'autre part, la modification de la distance du cadre à la poutre-châssis, ledit engin étant caractérisé en ce que ladite poutre-châssis est montée tourillonnante autour d'une traverse perpendiculaire à l'axe (A-A) de la poutre-châssis et portant, de part et d'autre de la poutre-châssis, deux vérins à double effet coaxiaux et perpendiculaires à la poutre-châssis et dont les tiges, dirigées vers l'extérieur et susceptibles de tourillonner dans les corps des vérins, sont articulées à leur extrémité, par une liaison tourillonnante, sur un axe-pivot parallèle à la poutre-châssis, chaque fourche étant montée tourillonnante sur ce pivot, des moyens étant prévus pour faire pivoter lesdites fourches autour de l'axe dudit pivot parallèle à la poutre-châssis ainsi qu'autour de l'axe (B-B) desdits vérins opposés.

Suivant une autre caractéristique ladite traverse est constituée par une structure rigide sur laquelle sont fixés en opposition les corps desdits vérins, ladite structure étant montée tourillonnante sur ledit manchon autour d'un axe (C-C) perpendiculaire à la fois à l'axe (A-A) de la poutre-châssis et à l'axe (B-B) de la traverse, des moyens élastiques étant prévus pour limiter l'inclinaison de l'axe de la traverse sur l'axe (A-A) de la poutre-châssis.

Une telle structure permet en disposant des palpeurs entre la traverse et la poutre-châssis de détecter, en particulier lors des virages, des efforts de torsion imposés au niveau de la jonction châssis-train arrière jugés intolérables, en vue de commander des vérins montés entre les roues avant par exemple du train arrière et le châssis de l'engin afin de soulever ces roues pour transformer l'engin en tricycle et faciliter ainsi la prise des virages.

Suivant encore une autre caractéristique,des vérins à double effet sont interposés entre la traverse et le châssis de l'engin, de part et d'autre de la poutre-châssis, ces vérins étant commandés à partir de détecteurs d'horizontalité en vue de maintenir le châssis constamment à l'horizontale.

Suivant encore une autre caractéristique les deux vérins montés en opposition sur la traverse sont commandés à partir de palpeurs d'éloignement desdits cadres porte-roues interposés entre le châssis et les cadres en vue de modifier ou de maintenir constante la voie du train arrière.

Par ailleurs, suivant un mode de réalisation préféré, lesdits moyenspour faire pivoter chaque fourche autour de l'axe (E-E) dudit pivot parallèle à la poutre-châssis sont constitués par deux vérins à double effet montés en parallèle, dont les corps tourillonnent sur la fourche cependant que les extrémités des tiges tourillonnent sur ladite tige de vérin, de part et d'autre de celle-ci autour de deux axes coaxiaux et perpendiculaires à l'axe (B-B) de ladite tige de vérin, lesdits vérins étant commandés de façon à maintenir les plans des roues arrière parallèles avec un angle sur l'horizontale constant égal ou non à 90°.

D'autres caractéristiques et avantages ressortiront de la description qui va suivre d'un engin conforme à l'invention, description donnée à titre d'exemple uniquement et en regard des dessins annexés sur lesquels :

- Fig. 1 représente une vue de dessus schématique de la structure d'un engin conforme à l'invention ;
- Fig. 2 représente une vue en élévation latérale de l'engin de la Fig. 1 ;
- Fig. 3 est une vue partielle en élévation du montage du cadre porte-roues sur la traverse de la poutre-châssis ;
- Fig. 4 représente une vue de droite du dispositif de la Fig. 3 ;

- 4 -                          0089910

- Fig. 5 est une coupe schématique verticale au niveau
  de la traverse, et
- Fig. 6 est une vue identique à celle de la Fig. 5 illustrant les possibilités de réglage de la voie et de l'horizontalité du châssis.

L'engin représenté sur les dessins comporte un châssis
constitué d'une poutre-châssis 1 disposée dans l'axe A-A et
dans le plan de symétrie longitudinal de l'engin et solidaire
d'un premier bâti horizontal rectangulaire avant 2 et d'un
second bâti horizontal rectangulaire arrière 3.

Le bâti avant 2 nettement plus allongé que le bâti
arrière 3 porte à son extrémité avant une roue motrice et
directrice 4 disposée dans le plan de symétrie de l'engin.

Dans l'intervalle séparant les deux bâtis 2-3 s'étend
une traverse 5 dont l'axe B-B coupe l'axe A-A à angle droit.

La traverse 5 est constituée par deux vérins identiques 6 et 7 à double effet, montés en opposition.

Les tiges 8 et 9 de ces vérins sont coaxiales, et
tournées vers l'extérieur. A l'extrémité des tiges 8 et 9 sont
articulés les supports des roues arrière 10.

Les corps 11 et 12 des vérins 8 et 9 sont reliés de
manière rigide par une pièce d'entretoisement symbolisée en
13 . La pièce 13 peut tourillonner librement autour d'un axe
C-C perpendiculaire à la fois à l'axe B-B et à l'axe A-A, sur
un manchon 14 tourillonnant lui-même librement sur la poutre-
châssis 1 sur laquelle il est enfilé.

Les divers organes ci-dessus, de même que l'ensemble
de ceux représentés sur les dessins sont schématisés, la représentation qui en est faite ayant simplement pour but de
faire comprendre le type de liaison existant entre chaque partie et la fonction qui doit être jouée.

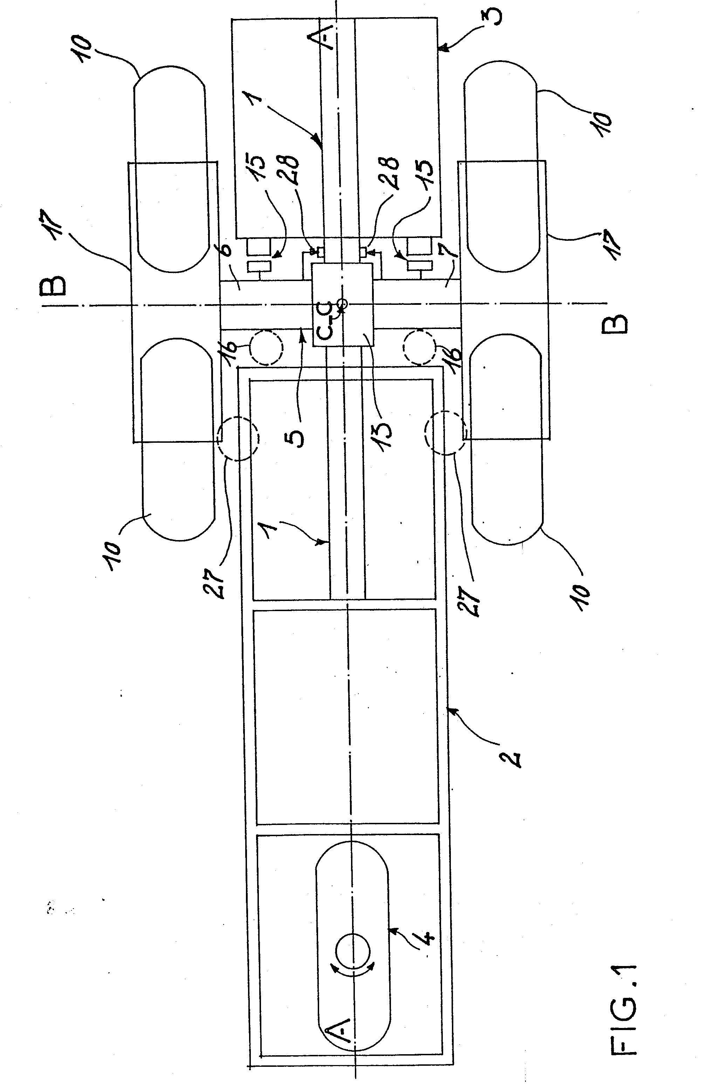

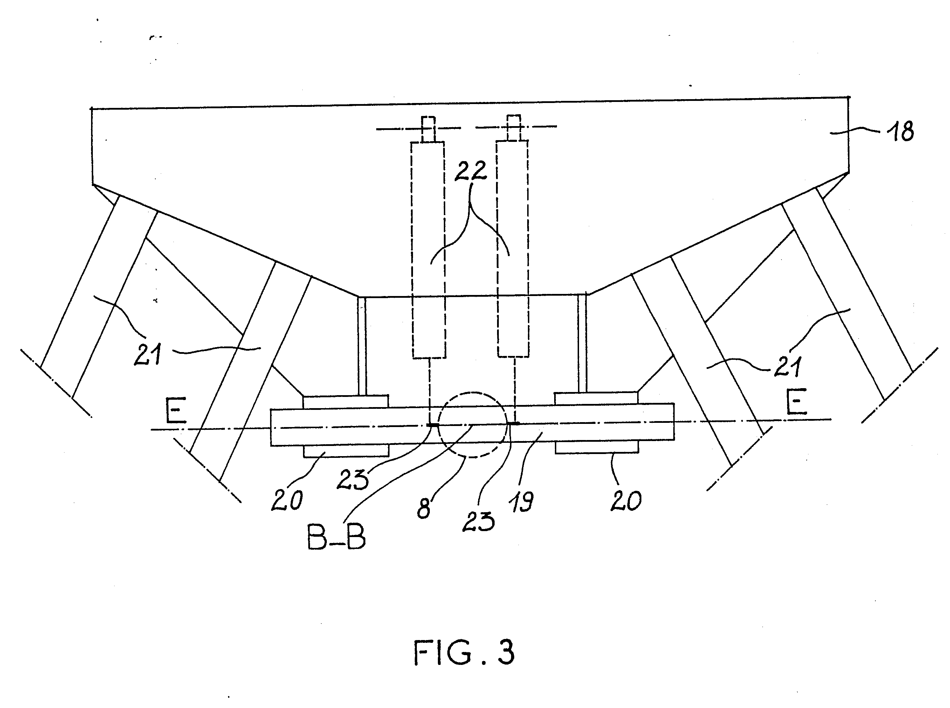

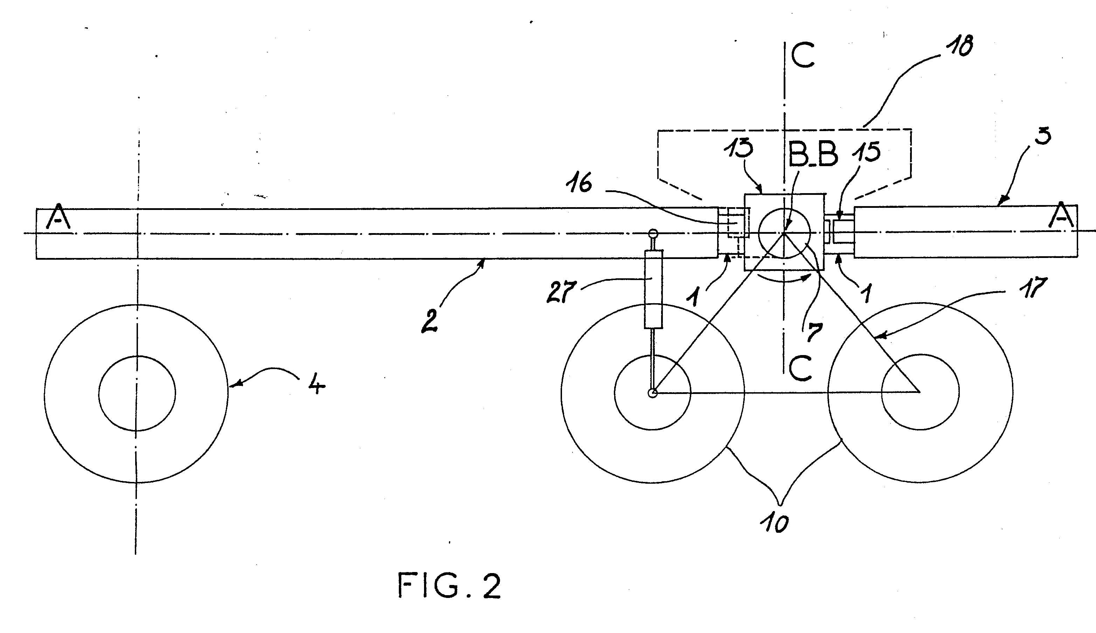

L'axe B-B qui forme normalement un angle de 90° avec
l'axe A-A peut donc s'incliner sur cet axe A-A avec toutefois
une limitation procurée par des moyens élastiques (symbolisés
en 15) interposés entre les corps des vérins 6 et 7, d'une part,
et la partie 3 du châssis (Fig. 1 et 2),d'autre part.

Ces moyens élastiques 15 sont par exemple des ressorts
ou des silent-blocs dont on peut éventuellement régler la raideur ou la tension.

Entre la traverse 5 et le châssis (1-2-3) est prévu

0089910

un dispositif de maintien de l'horizontalité du châssis (ou du maintien de celui-ci sous une inclinaison déterminée) quelle que soit la déclivité du terrain sur lequel circule l'engin.

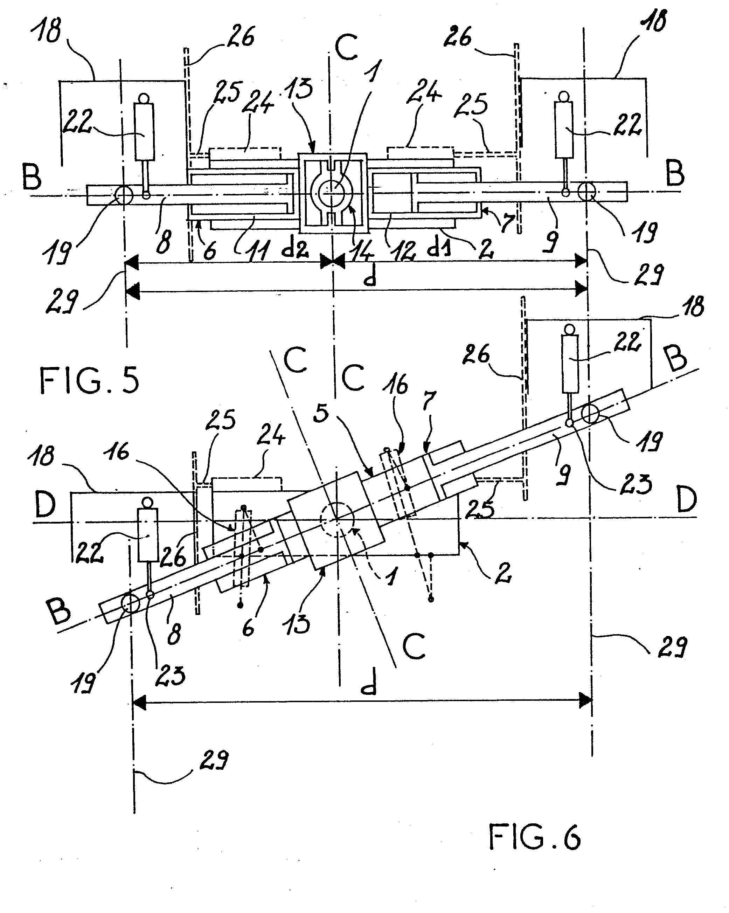

Ce dispositif est constitué par exemple par deux vérins 16 à simple ou double effet, disposés de part et d'autre de la poutre-châssis 1 (Fig. 6) et interposés entre les corps des vérins 6,7 et le châssis 2. La disposition et l'articulation de montage des vérins 16 sont telles que l'axe B-B puisse effectuer un mouvement de ciseaux avec le plan D-D du châssis de part et d'autre de ce plan.

Les vérins 16 sont commandés par exemple à partir de détecteurs d'horizontalité ou de correcteurs d'assiette appropriés montés sur le châssis.

A chaque extrémité des tiges 8 et 9 des vérins 6 et 7 est articulée une paire de roue 10 du train arrière.

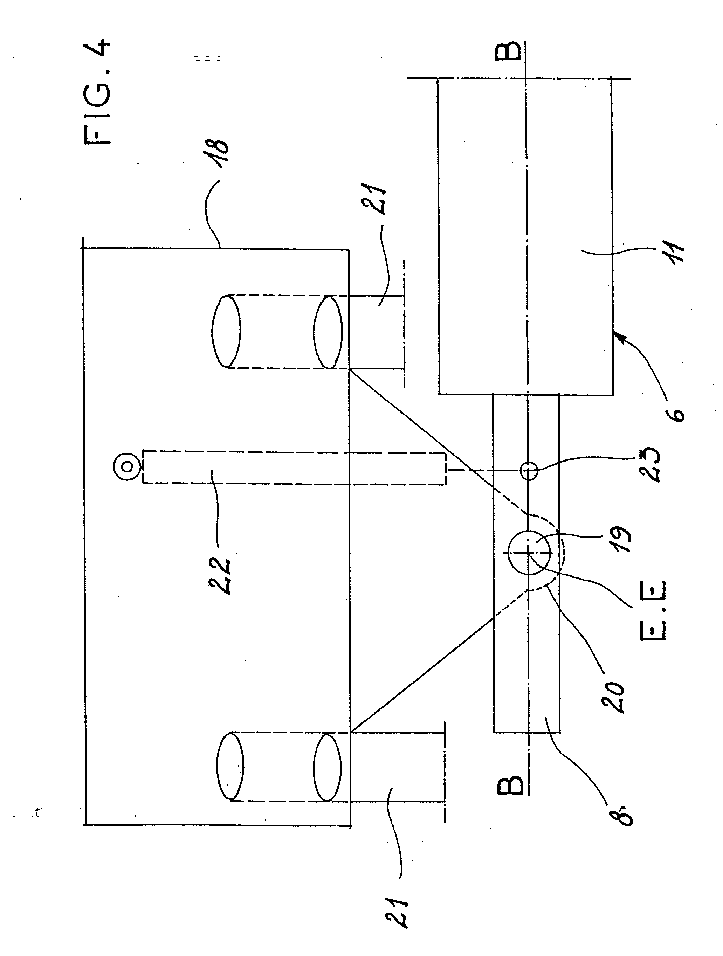

A cet effet, de chaque côté de l'engin les deux roues 10 sont disposées dans le même plan vertical et portées par un cadre triangulaire schématisé en 17 sur la Fig. 2 et en forme de fourche de bicyclette (représentée plus en détails sur les Fig. 3 et 4).

On a schématisé en 18 sur les Fig. 2 à 6 la partie supérieure de la fourche porte-roue.

Le cadre 17, c'est-à-dire l'ensemble 10-17-18 peut peut pivoter autour de l'axe B-B. A cet effet, l'extrémité des tiges de vérin 8,9 porte un axe-pivot 19 parallèle à la poutre-châssis 1 et supportant ledit ensemble 10-17-18.

Les tiges 8 et 9 pouvant librement tourillonner autour de leur axe à l'intérieur de leur corps de vérin, l'ensemble 10-17-18 peut donc osciller autour de l'axe B-B.

L'axe E-E du pivot 19 coupe l'axe B-B.

Par ailleurs, l'ensemble 10-17-18 est lui-même monté tourillonnant sur l'axe-pivot 19 par l'intermédiaire de deux manchons 20 engagés sur l'axe-pivot 19 de part et d'autre de la tige 8 (ou 9) et solidaire de la fourche porte-roues.

Cette fourche est constituée d'un caisson 18 portant des tubes inclinés 21 de part et d'autre des roues 10 et aux extrémités desquels sont fixés les moyeux des roues.

L'ensemble 10-17-18 peut pivoter autour de l'axe E-E au moyen de deux vérins à double effet 22 interposés entre le caisson 18 et la tige de vérin 8 (9).

Les vérins 22 sont disposés sensiblement à la verticale de part et d'autre de la tige 8 (9). Ils sont articulés, d'une part sur le caisson 18 et, d'autre part, sur un axe 23 coupant à angle droit l'axe B-B.

Sur la Fig. 5, on a représenté en tiretés en 24 des palpeurs à tige 25 de longueur réglable. Les palpeurs 24 sont fixés à plat sur le châssis (bâti 2 par exemple) et leur tige 25 coopère avec une platine verticale 26 fixée sur chaque caisson 18 du côté intérieur.

Les palpeurs 24 sont reliés à des électro-vannes de commande d'alimentation des vérins 6 et 7 à des fins qui seront explicitées plus loin.

Enfin, chaque paire de roues arrière 10 est munie d'un vérin 27 à simple effet interposé entre le châssis (bâti 2) et le moyeu de la roue 10 avant du train arrière. Ce vérin 27 est chargé de relever la roue avant du train arrière pour faciliter les virages ; la commande des vérins 27 étant assurée à partir de palpeurs 28 interposés entre la traverse 5 (Fig.1) et la poutre-châssis 1.

Le fonctionnement des dispositifs représentés et décrits ci-dessus est le suivant.

L'engin est automoteur, la traction étant assurée de préférence par des moteurs hydrauliques montés dans les moyeux de chaque roue (4,10) et alimentés à partir d'une centrale hydraulique embarquée actionnée par un moteur thermique. La centrale alimente également les divers vérins hydrauliques dont il a été question plus haut.

Le moteur et la centrale sont portés par le châssis (2,3) de même que le poste de pilotage et de commande et que le ou les outils dont on désire équiper l'engin. Celui-ci peut en effet servir aux travaux agricoles de toute nature nécessitant une adhérence importante.

Il peut servir aux travaux forestiers, notamment en massifs montagneux, à la pose de canalisations de tous types (posage de drains en particulier).

L'engin peut enfin, au lieu d'être utilisé comme porte-outils, être employé comme véhicule tous terrains dont les applications sont pratiquement illimitées.

L'intérêt majeur de l'engin réside dans son ossature porteuse à géométrie variable lui permettant en terrain accidenté ou en déclivité une grande mobilité, une grande souplesse d'emploi et une adaptation remarquable à des contraintes physiques particulières telles que par exemple le maintien à l'horizontale du plan du châssis, le maintien de la voie du train arrière, le maintien à la verticale du plan des roues arrière.

L'ossature de l'engin présente un premier degré de liberté (axe de rotation A-A) entre le châssis et les roues arrière 10 du fait de la rotation de la traverse 5 autour de la poutre-châssis 1. Ceci permet en jouant sur les vérins 16 de maintenir le plan D-D du châssis (Fig. 6) à l'horizontale ou incliné sur l'horizontale d'un certain degré en dépit des variations de la déclivité du terrain (lorsque l'engin se déplace perpendiculairement à la ligne de plus grande pente bien entendu). Ce maintien du châssis est assuré, soit manuellement par le conducteur de l'engin, soit automatiquement à l'aide d'un système d'asservissement et de détecteurs d'incliaison appropriés.

L'ossature présente un second degré de liberté constitué par la possibilité de régler l'éloignement des roues 10 vis-à-vis de la poutre-châssis 1 grâce aux vérins 6 et 7. Ces derniers peuvent se commander indépendamment l'un de l'autre comme illustré par la Fig. 5 sur laquelle la distance $d_1$ entre la poutre-châssis 1 et l'axe-pivot 19 du train de roues de droite est nettement supérieur à la distance $d_2$ entre la poutre-châssis et l'axe-pivot 19 de gauche.

Un tel réglage peut se révéler nécessaire par exemple pour maintenir le centre de gravité de la charge ou de l'outil porté par l'engin au centre de gravité de ce dernier.

Les vérins 6 et 7 peuvent aussi être commandés en vue de conserver constante la voie d entre les plans (matérialisés par les axes 29 sur les Fig. 5 et 6) des roues arrière 10 quelle que soit la déclivité du terrain.

Lorsque l'engin se déplace sur un terrain en pente et se trouve en devers (Fig. 6) l'axe B-B est parallèle au sol. Si l'on veut conserver par rapport à l'horizontale la même voie d que lorsque l'engin est sur terrain plat (Fig. 5), il faut mettre en légère extension les tiges 8 et 9 des vérins 6 et 7. Ceci est réalisé automatiquement par les palpeurs 24-25 coopérant avec les platines verticales 26. Lors d'un

- 8 -

0089910

décalage angulaire entre l'axe B-B et le plan D-D, la longueur des tiges sensibles 25 des palpeurs varie. Il suffit de prévoir un système d'asservissement commandé par les palpeurs 24 et agissant sur les vérins 6 et 7 pour assurer une voie d constante correspondant à des longueurs déterminées et affichées des tiges sensibles 25.

Cet asservissement n'est possible bien entendu que parce que les plans des roues arrière 10 sont astreints constamment à la verticalité suivant un troisième degré de liberté de l'ossature de l'engin au niveau de l'articulation autour des axes-pivots 19 des cadres portant les roues arrières 10.

A cet effet, les vérins 22 sont asservis de façon à ce que, quelle que soit l'inclinaison sur l'horizontale de l'axe B-B, les plans 29 des roues arrière 10 soient verticaux.

Les vérins 22 sont asservis par exemple par des détecteurs de verticalité associés à chaque cadre 18 porte-roue.

Il est bien entendu possible de donner auxdits plans 29 un angle quelconque par rapport à la verticale.

Grâce à un quatrième degré de liberté constitué par la possibilité d'oscillation de l'ensemble 10-17-18 autour de l'axe B-B il est possible, à l'aide des vérins 27, de soulever légèrement du sol l'une des roues 10 de chaque paire afin de transformer provisoirement l'engin en tricycle pour permettre les virages. En l'absence d'un tel dispositif, il risquerait en virage de se produire des efforts de torsion excessifs au niveau de la jonction entre le train arrière et la poutre-châssis 1 dûs aux frottements des pneus sur le sol.

Pendant le virage, de chaque côté de l'engin, l'une des roues arrière est donc soulevé temporairement et automatiquement sous le contrôle des palpeurs 28. Ceux-ci détectent tout franchissement d'un seuil prédéterminé et réglable de l'inclinaison de l'axe B-B sur l'axe A-A consécutif auxdits efforts de torsion apparaissant dès que l'engin négocie un virage.

Lespalpeurs 28 commandent ainsi automatiquement la mise en service puis hors service des vérins 27 simultanément.

Du fait que les roues 4 et 10 sont toutes motrices, il faut prévoir pour les roues 10 susceptibles d'être soulevées un moyen pour stopper l'envoi d'huile motrice dans les moteurs des roues en question durant tout le temps de leur soulèvement.

Cette commande par palpeur 28 n'est évidemment possible que grâce au cinquième degré de liberté de l'ossature de l'engin et correspondant à la variation possible de l'angle formé entre les axes A-A et B-B grâce à l'oscillation possible de la traverse 5 autour de l'axe C-C.

Cette possibilité est cependant limitée en amplitude et soumise à une contrainte élastique antagoniste afin de conserver à l'ensemble poutre-châssis 1 - traverse 5 une certaine rigidité, l'angle entre les axes A-A et B-B ne pouvant se déformer que de quelques degrés seulement de part et d'autre de la position normale à angle droit. C'est précisément le rôle des ressorts ou silent-blocs que de limiter ces déformations, la raideur ou tension de ces systèmes élastiques pouvant être réglées.

Les vérins 27 peuvent être bien entendu commandés directement par le conducteur de l'engin, les palpeurs 28 étant mis hors service.

Enfin, l'invention n'est évidemment pas limitée au mode de réalisation représenté et décrit ci-dessus mais en couvre au contraire toutes les variantes notamment en ce qui concerne les moyens pour réaliser les différents degrés de liberté mutuelle des éléments de l'ossature porteuse de l'engin et les moyens moteurs (vérins hydrauliques ou autres moteurs) pour modifier la géométrie de ladite ossature.

R E V E N D I C A T I O N S
:-:-:-:-:-:-:-:-:-:-:-:-:

1. Engin automobile tous terrains à roues indépendantes et commandées par un moteur coaxial à chacune des roues motrices, comprenant une poutre-châssis (1) dans l'axe longitudinal de symétrie de l'engin, une roue avant (4) portée par une fourche ou analogue elle-même montée à l'avant de la poutre-châssis et orientable autour d'un axe perpendiculaire à ladite poutre-châssis, et un train arrière moteur composé, de chaque côté de la poutre-châssis, de deux roues (10) disposées dans le même plan et portées par un cadre triangulaire (17) en forme de fourche de bicyclette, ce cadre étant relié à la poutre-châssis par une liaison permettant, d'une part, une rotation dudit cadre à la fois autour d'un axe orthogonal à la poutre-châssis (1) et autour d'un axe parallèle à cette dernière et, d'autre part, la modification de la distance du cadre à la poutre-châssis, ledit engin étant caractérisé en ce que ladite poutre-châssis (1) est montée tourillonnante autour d'une traverse (5) perpendiculaire à l'axe (A-A) de la poutre-châssis  et portant, de part et d'autre de la poutre-châssis, deux vérins à double effet  (6,7) coaxiaux et perpendiculaires à la poutre-châssis et dont les tiges (8,9) dirigées vers l'extérieur et susceptibles de tourillonner dans les corps (11,12) des vérins, sont articulées à leur extrémité, par une liaison tourillonnante, sur un axe-pivot (19) parallèle à la poutre-châssis (1), chaque fourche (17;18) étant montée tourillonnante sur ce pivot (19), desmoyens étant prévus pour faire pivoter lesdites fourches autour de l'axe dudit pivot parallèle à la poutre-châssis ainsi qu'autour de l'axe (B-B) desdits vérins opposés (6,7).

2. Engin automobile tous terrains suivant la revendication 1, caractérisé en ce que la poutre-châssis (1) est constituée de deux sections rectangulaires allongées (2,3) reliées par un tube (1) tourillonnant dans un manchon (14) solidaire de ladite traverse (5).

3. Engin automobile tous terrains suivant les revendications 1 et 2 caractérisé en ce que ladite traverse (5) est constituée par une structure rigide (13) sur laquelle sont fixés en opposition les corps (11,12) desdits vérins (6,7), ladite structure (13) étant montée tourillonnante sur ledit manchon (14) autour d'un axe (C-C) perpendiculaire à la fois à l'axe (A-A) de la poutre-châssis (1) et à l'axe (B-B) de la traverse (5), des moyens élastiques (15) étant prévus pour limiter l'inclinaison de l'axe (B-B) de la traverse sur l'axe (A-A) de la poutre-châssis.

4. Engin automobile tous terrains suivant l'une des revendications 1 à 3, caractérisé en ce que ledit axe-pivot (19) parallèle à la poutre-châssis (1) tourillonne sur la tige de vérin (8,9) autour d'un axe (E-E) perpendiculaire à l'axe (B-B) de latige et traverse celle-ci, ladite fourche (17;18) étant articulée sur ledit axe-pivot parallèle (19) par l'intermédiaire de deux manchons (20) tourillonnant sur ce dernier, de part et d'autre de la tige de vérin (8,9).

5. Engin automobile tous terrains suivant l'une des revendications 1 à 4, caractérisé en ce que lesdits moyens pour faire pivoter chaque fourche (17,18) autour de l'axe (E-E) dudit pivot (19) parallèle à la poutre-châssis (1) sont constitués par deux vérins à double effet (22) montés en parallèle, dont les corps tourillonnent sur la fourche cependant que les extrémités des tiges tourillonnent sur ladite tige de vérin (8,9),de part et d'autre de celle-ci, autour de deux axes (23) coaxiaux et perpendiculaires à l'axe (B-B) de ladite tige de vérin, lesdits vérins (22) étant commandés de façon à maintenir les plans (29) des roues arrière (10) parallèles avec un angle sur l'horizontale constant égal ou non à 90°.

6. Engin automobile tous terrains suivant l'une des revendications 1 à 5, caractérisé en ce que lesdits moyens pour faire pivoter chaque fourche (17,18) autour de l'axe (B-B) desdits vérins opposés (6,7) sont constitués par un vérin (27) à simple ou double effet interposé entre la poutre-châssis (1,2,3) et le support de moyeu de l'une des deux roues (10) portées par ladite fourche.

7. Engin automobile tous terrains suivant la revendication 6, caractérisé en ce que lesdits vérins (27) de relevage de l'une des roues (10) sont asservis à des palpeurs (28) interposés entre la traverse (5) et la poutre-châssis et chargés de détecter le dépassement d'un seuil prédéterminé et

- 3 -

réglable de l'inclinaison de l'axe (B-B) de la traverse (5) sur l'axe (A-A) de la poutre-châssis (1).

8. Engin automobile tous terrains suivant l'une des revendications 1 à 7, caractérisé en ce qu'il comporte deux vérins (16) de maintien, lorsque l'engin se déplace transversalement à la ligne de plus grande pente du terrain, du plan (D-D) du châssis (1,2,3) del'engin sous une inclinaison constante nulle ou non par rapport à l'horizontale quelle que soit l'inclinaison de l'axe (B-B) de la traverse (5), lesdits vérins (16) étant interposés entre l'un des éléments (2,3) du châssis et la traverse (5), et commandés,soit par le conducteur de l'engin, soit automatiquement à l'aide d'un système d'asservissement et de détecteurs d'inclinaison appropriés.

9. Engin automobile tous terrains suivant l'une des revendications 1 à 8, caractérisé en ce que lesdits vérins en opposition (6,7) sont asservis à partir de détecteurs (24) de distance entre l'axe (A-A) de la poutre-châssis (1) et le plan (29) des roues arrière (10) en vue de maintenir constante la voie arrière (d) quelle que soit l'inclinaison sur l'horizontale de l'axe (B-B) de la traverse (5).

10. Engin automobile tous terrains suviant la revendication 9, caractérisé en ce que lesdits détecteurs (24) sont constitués par des palpeurs à tige sensible (25) réglable fixés sur le châssis (2,3) parallèlement à son plan (D-D), les tiges sensibles (25) coopérant avec une platine (26) solidaire du cadre (17,18) porte-roues arrière et disposée parallèlement au plan (29) des roues (10).

0089910

FIG.1

0089910

FIG.3

FIG. 2

0089910

FIG.4

0089910

5/5

0089910

FIG.5

FIG.6

Office européen
des brevets

RAPPORT DE RECHERCHE EUROPEENNE

0089910
Numéro de la demande

EP 83 45 0006

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 307 694 (MINISTER OF AGRICULTURE et al.) * Figure 3 * | 1 | B 62 D 61/10<br>B 62 D 21/18 |
| A | FR-A-2 285 287 (S.A. D'APPLICATIONS et al.) * Figure 1 * | 1 | |
| A | US-A-4 099 733 (AHONEN) * Figures 1-3 * | 1 | |
| A | US-A-4 207 956 (McCOLL) | 1 | |
| A | US-A-4 187 923 (McCLURE et al.) | 1 | |
| A | US-A-3 349 931 (WAGNER) | 1 | DOMAINES TECHNIQUES RECHERCHES (Int. Cl. ³) |
| | | | B 62 D |

Le présent rapport de recherche a été établi pour toutes les revendications

| Lieu de la recherche | Date d'achèvement de la recherche | Examinateur |
|---|---|---|
| LA HAYE | 18-05-1983 | SCHMAL R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82